# EUROPEAN PATENT SPECIFICATION

(11) **EP 0 741 950 B1**
(45) Date of publication and mention of the grant of the patent: **14.11.2001**
(21) Application number: 94924313.3
(22) Date of filing: 11.08.1994
(51) Int. Cl.: H04Q 7/24

(54) **CT2 TELEPHONE SYSTEM**
CT2 TELEFONSYSTEM
SYSTEME TELEPHONIQUE CT2

(30) Priority: 12.08.1993 FI 933574
(43) Date of publication of application: 13.11.1996
(73) Proprietor: Nokia Networks Oy, 02150 Espoo (FI)
(72) Inventor: HURME, Harri, FIN-02100 Espoo (FI); HEIKKILÄ, Juha, FIN-02210 Espoo (FI)
(74) Representative: Holmström, Stefan Mikael
(86) International application number: FI9400350
(87) International publication number: WO9505720

(56) References cited:
- WO-A-91/18484
- US-A- 4 731 812

## Description

The invention relates to a CT2 telephone system according to the preamble of the attached claim 1.

The second generation of the Cordless Telephone CT2 was originally defined by the British standard BS 6833 (Reference [1], the list of references is at the end of the specification part), and the radio parts of the system by the specification MPT 1334 (Reference [2]). The problem with these original standards was the poor definition of the protocol between the handset and the base station. When the incompatible radio link protocols developed by the different manufacturers began to be problematic, a committee was set up under the direction of the DTI (United Kingdom Department of Trade and Industry), the purpose of which was to define a common radio link protocol CAI (Common Air Interface). This is done in the specification MPT 1375 of the Ministry of Posts and Telecommunications) (Reference [3]).

The radio link protocol of the CT2 system will now be described as background information for the more detailed description of the invention to be presented below.

The CT2 system has been assigned the frequency range between 864 and 868 MHz, which is divided into 100-kHz channels. The 4 MHz band will thus contain 40 radio channels. The maximum transmission power is only 10 mW, which allows long operation periods on one hand and reduces the price of the telephone on the other.

The CT2 system employs a two-level FSK modulation (Frequency Shift Keying) shaped by a Gaussian filter. The frequency deviation of 14.4 - 25.2 kHz above the center frequency corresponds to a binary one, whereas the deviation of 14.4 - 25.2 kHz below the center frequency corresponds to a binary zero.

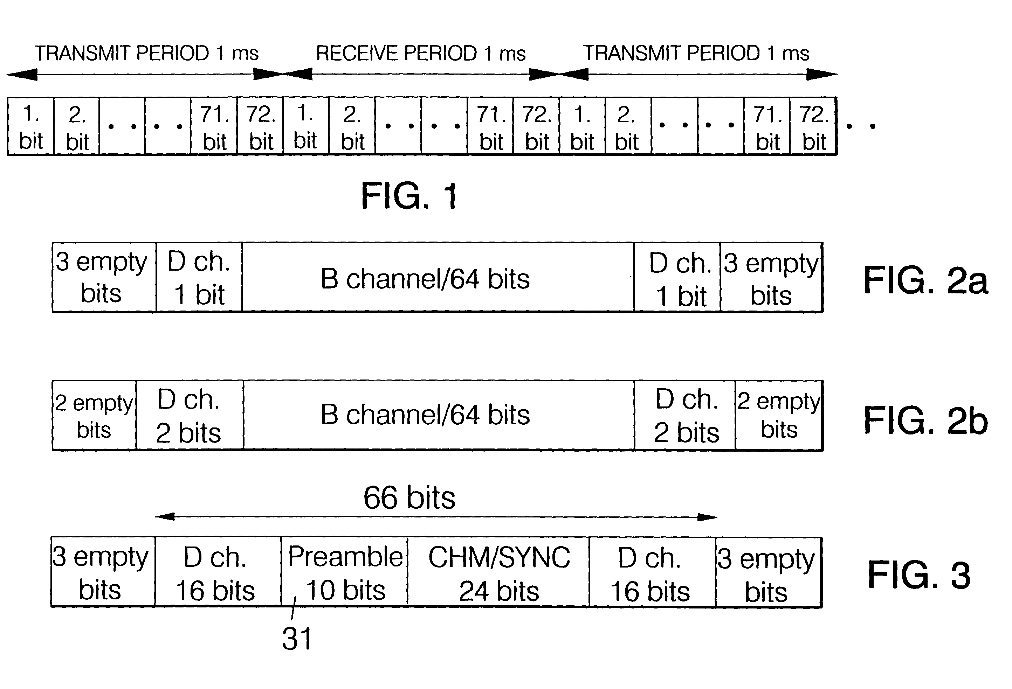

In the CT2 system, transmission and reception take place at the same frequency. To establish a two-way connection between the base station and a handset, transmission alternates with reception at the frequency of 500 Hz. This method is known as Time Division Duplex (TDD). When the alternation frequency of 500 Hz is used, the length of both the transmission and reception period is 1 ms. The bit rate is 72 kbit/s in the CT2 system, whereby one transmission period contains 72 bits. However, a time of four bits of the transmission period is reserved for turning off the transmitter and for setting the frequency of the receiver, so that no more than 68 bits of payload data can be transmitted per one period. Synchronization required by the transmission connection is performed by synchronizing the handset to the transmit/receive (TX/RX) alternation of the base station and then to the appropriate bit rate. This will be explained more closely below. The principle of the transmit/receive alternation between the base station and the handset is illustrated in Figure 1.

The radio link protocol may also be dealt with by dividing the different operations on the basis of the OSI layer to which they belong. (The OSI model (Open System Interconnection) is a model defined by the ISO (International Standards Organization), which specifies the way of communication of open systems.)

The function of layer 1 of the OSI model is the selection of a suitable radio channel and the establishment of a two-way digital connection. In signalling, the main option is the establishment of a point-to-point connection; however, on establishing a connection, it is possible for a number of base stations to page handsets at the same time, and on the other hand, more than one base station is able to respond to the page of a handset. Radio channels are selected dynamically in the CT2 system, i.e. a channel having a sufficiently low noise level is selected automatically on establishing a connection. Due to the dynamic channel selection, no actual frequency planning is required when a network is being set up.

The 72-kbit/s transmission capacity available on an individual radio channel is divided between three different information channels. (It is to be emphasized that information channels, not radio channels, are referred to herein). The information channels are
a) signalling channel or D channel
b) speech and data transmission channel or B channel
c) synchronization channel or SYN channel.

The transmission requirements of the different channels vary at different stages of a call, and therefore they can be assigned a variable amount of transmission capacity. In certain situations, one of the channels may be absent. Such different channel combinations are known as multiplexes, the CT2 system utilizing three such multiplexes: multiplex 1, multiplex 2, and multiplex 3. In addition, two variations of multiplex 1 are available (multiplex 1.2 and multiplex 1.4).

The CT2 system uses the B and D channels in the same way as they are used generally in other telecommunications applications, but the SYN channel is specific to the CT2 system. The SYN channel (to be described more closely below) is used in multiplexes 2 and 3, when the bit and TX/RX synchronization have not necessarily been achieved. The channel comprises a so-called preamble, which consists of alternation of a binary one and a binary zero during ten bits. The preamble is followed by a special 24-bit code word, which marks the radio channel to be used in connection establishment. The code words always have a predetermined position in the transmission period, whereby the code word can be used for synchronizing the transmit/receive alternation. There are four different code words, two of which, CHMP and CHMF, are used when a link connection is attempted to be opened on a radio channel. CHM stands for Channel Marker, and the letters F and P indicate whether the transmitting party is a Fixed part (i.e. base station) or a Portable part (i.e. handset). The other two code words are SYNCP and SYNCF, and they indicate to the other communicating party that synchronization has been achieved.

The code words CHMP and CHMF are each other's inverted values, and so are SYNCP and SYNCF. When a handset scans a radio channel, looking for the CHMF or SYNCF word, it cannot detect a code word transmitted by another handset. The same applies to the base station. The code words are selected so that they have the minimum auto-correlation and at the same time the minimum cross-correlation with other frequently occurring bit patterns.

Multiplex 1 is used when the handset and the base station are in the speech state, i.e. a connection has been established, and the bit and TX/RX synchronization have been achieved. The SYN channel is not transmitted at all in multiplex 1, i.e. the connection has to be re-initialized if synchronization is lost. Two variations of multiplex 1 are used: multiplex 1.2, described in Figure 2a, and multiplex 1.4, described in Figure 2b. In both of them, the length of the B channel is 64 bits in one period, whereas the length of the D channel varies. D channel is transmitted in multiplex 1.2 at a 1-kbit/s rate, i.e. one bit at the beginning of the period and one at the end. In multiplex 1.4, the rate of the D channel is double, i.e. 2 kbit/s, whereby two bits are transmitted at the beginning and two bits at the end. The B channel is used for speech transmission by inverting, in a sequence of bits, certain bits defined in the specification. By the use of this method, the occurrence of ones and zeros will be sufficiently arbitrary. No actual ciphering of speech is used in the CT2 system. There is no error detection or correction on the B channel.

The interchange of the base station and handset identities is performed on the D channel, thus ensuring the maintenance of the radio connection. On the D channel, errors are corrected by re-transmissions, and if the error ratio rises excessively in view of the speech transmission, the radio channel can be changed without interrupting the call. Error detection and other overhead information reduce the actual transmission capacity of the D channel to about one half of the above-mentioned values, 1 kbit/s or 2 kbit/s.

A guard time of two (multiplex 1.2) or three (multiplex 1.4) bits is provided at the beginning of each period. The guard time also determines, through the maximum delay, the maximum coverage of the cell.

All CT2 equipments have to know multiplex 1.2, whereas the use of multiplex 1.4 is voluntary.

Multiplex 2, the structure of which is shown in Figure 3, is used at the call establishment stage, when the base station wishes to establish a connection to a handset, or when a handset responds to a call establishment request made by the base station. Multiplex 2 thus uses the D channel and the SYN channel. When the base station wishes to establish a connection to a handset, it has to transmit its own identity and at the same time ensure that the handset is able to synchronize to the base station. For this reason, the above-mentioned 10-bit preamble 31 is transmitted by multiplex 2, which allows bit synchronization, and then the above-mentioned 24-bit CHM code word is transmitted, which allows the transmit/receive alternation to be synchronized. After the handset has synchronized to the base station and received the base station identity, it transmits the SYNCP word on the SYN channel. The base station identity LID (Link Identification Code) is transmitted with multiplex 2 on the D channel, and the handset identity PID (Portable Identification Code) is transmitted in the other direction. With multiplex 2, the data speed of the D channel is, as appears from Figure 3, 16 kbit/s, of which about one half will be available for use after error detection and other overhead information.

When a handset initiates a connection to the base station, problems occur in finding the right bit and TX/RX synchronization, as the base station is not able to synchronize to the handset. When frequencydivision multiplexing is used, the base station has to contain a separate radio for each connection. A single radio that is not in synchronism with the others is already enough to block the reception of the other radios when it transmits. For this reason, the handset should be able to find the right synchronization. In order that the right synchronization could be found, multiplex 3 is used when a handset initiates a connection to the base station.

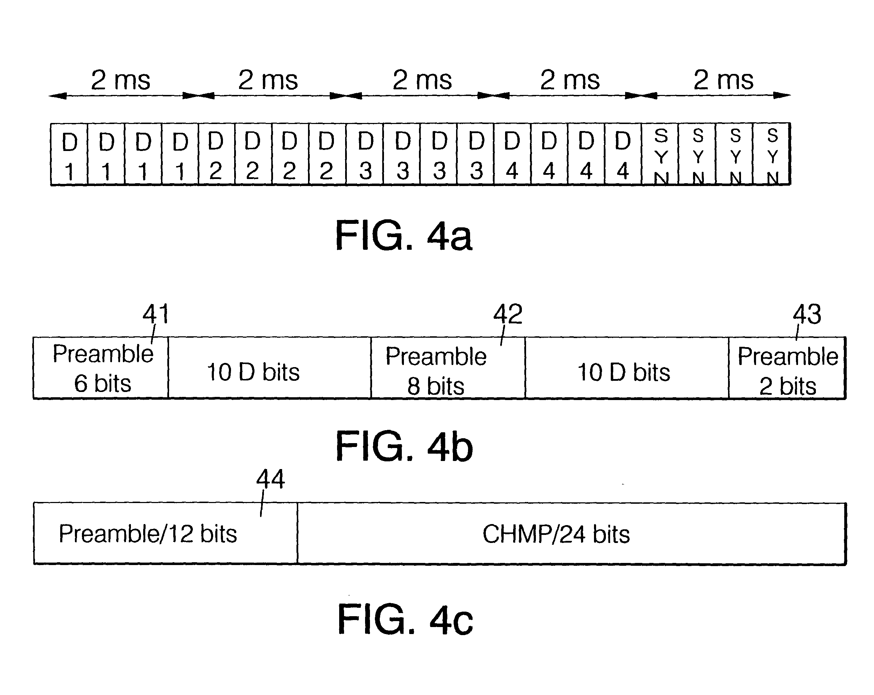

Multiplex 3 does not follow the normal 500 Hz TX/RX alternation, but when the handset wishes to initiate a connection, it transmits a 10-ms continuous transmission shown in Figure 4a, and then listens for 4 ms. If no response is received, the handset repeats the above-mentioned sequence for five seconds. Multiplex 3 contains the D channel and SYN channel. The D channel is divided into four 20-bit periods, each of which is repeated four times. In Figure 4a, these periods are indicated with the references D1 to D4. Each one of the periods is similar to that shown in Figure 4b, i.e. a 6-bit first preamble portion 41 is transmitted first in each one of the periods D1 to D4, and then, after 10 D bits, a 8-bit second preamble portion 42 (1, 0, 1, 0...), whereafter 10 further D bits are transmitted, and finally, a 2-bit third preamble portion 43. After the D-channel periods, the SYN channel is transmitted, also four times in succession (cf. Figure 4a). As shown in Figure 4c, the SYN channel consists of a 12-bit preamble portion 44 followed by a 24-bit code word CHMP. This multiplex structure ensures that all of the information will fall into the reception period of the base station. The D channel contains a synchronization word, a handset identity PID, and the identity LID of the base station to which a connection is to be established. After the base station has received and interpreted the received message, it attempts to establish a connection by transmitting a response to the handset with multiplex 2.

The function of layer 2 of the OSI model is error detection and correction on the D channel, maintenance of a radio connection, identification of the other communicating party, and forwarding of messages over the radio link. Layer 2 also takes care of data transmission to layer 3. Error detection is performed by the CRC (Cyclic Redundancy Check) method, and errors are corrected by repeated transmission of the packet.

Data is transmitted on the D channel in packet format, and the transmission is based on the specification MPT 1317 (Reference [4]), which defines generally the way in which packets to be transmitted over a radio link should be assembled. In the CT2 system, transmission on the D channel starts with a 16-bit synchronization word followed by an ACW word (Address Code Word) and at the most five DCW words (Data Code Word). The code words are 64 bits in length, and the use of DCW code words is optional. The more detailed content of the code words is described in Reference [3], so the code words will not be described more fully herein.

Layer 3 of the OSI model transmits actual payload information to the other end of the radio link. Such information includes e.g. the numbers 0 to 9 and the characters # and * inputted by the user. In the other direction, it is possible to transfer e.g. messages from a PBX directly to the display of a handset. From the viewpoint of signalling layer 3, layer 2 only establishes an interference-free transmission connection to the other end of the radio link.

Speech encoding utilizes adaptive differential pulse code modulation (ADPCM) at a rate of 32 kbit/s. The algorithm to be used is defined in the CCITT recommendation G.721, and it enables data transmission at the rate of 4.8 kbit/s, and the use of a telefax. If the power consumption of the handset is to be limited, it is possible to compromise over the recommendation, but the quality of speech should, however, meet the requirements specified in Section 2 of the standard BS 6833 (Reference [1]).

Transmission of information and the operation of the different multiplexes in the CT2 system have been described above at different stages of a call. Call establishment, however, will not be described more fully herein, as the present invention is not concerned with call establishment as such. Reference [5], for instance, gives an overall picture of call establishment.

The CT2 telephone system described briefly above and its known applications, however, also have several drawbacks, which may have contributed to the fact that the commercial success of the system has not been as great as initially expected.

In the prior solutions, the base station and handset belong integrally together, so that when a subscriber has acquired a handset, it has also been necessary for him or her to acquire a base station, which is positioned in place of a conventional telephone.

Previously a solution is known from US - 4 731 812, where a radio exchange and a stationary unit is used in order to provide wireless communication for a portable telephone set. A drawback with this prior art solution is, however, that the subscriber must have in his premises both the radio exchange and the stationary unit in order to use the system. Thus the prize of the equipment needed at the subscriber permises is relatively high.

The CT2 system does not either support the roaming and handover functions known *per se* from cellular networks. The roaming function, allowing the subscriber to move within the area of a number of base stations (cells), is actually possible to implement by the known CT2 technology when a handset initiates a call towards the network. In such a case, the codes of all telephones entitled to initiate a call have to be programmed in each base station from the area of which a call is to be made. This method, however, is difficult due to the great number of base stations (the radius of the CT2 cell is typically only about 120 m). On the contrary, the known CT2 solutions have not allowed the implementation of the handover function, i.e. the change of the base station during an ongoing call, without interrupting the call.

In order that the subscriber could acquire a handset without having to purchase the entire base station, it would be possible to distribute the functions of the base station so that at least part of it would be positioned at a higher level in the network. Accordingly, it would not be necessary to replace the conventional telephone with a complete base station in addition to the handset. Base station functions have previously been distributed in such a way that the control unit of the base station has been connected by an optical fibre to a converter unit containing the radios and an optoelectric converter for converting an optical signal into an electric signal, and amplifiers for amplifying the electric signal before it is transmitted over the radio link. In the CT2 system, a drawback of a distributive solution of this type would be that the rate of the transmit/receive alternation would depend on the delay between the control unit and the converter unit; in other words, the delay between the control unit and the converter unit would diminish the maximum permissible delay over the radio link.

The object of the present invention is, in fact, to provide an improvement with respect to the above-mentioned drawbacks. This is achieved by a CT2 telephone system according to the invention, which is characterized by what is disclosed in the characterizing portion of the attached claim 1.

The idea of the invention is to distribute the base station by positioning all base station functions except for the radio parts at the exchange end of the subscriber line, whereas the radio parts and timing means are positioned at the subscriber end of the subscriber line, the timing means synchronizing the radio parts in accordance with synchronization information transmitted by the base station over the subscriber line.

The timing and radio unit at the subscriber end of the subscriber line does not process calls, but it is only locked to data to be transmitted over the subscriber line, the data containing the synchronization information allowing synchronization of the radio link between the radios and handsets.

When the solution according to the invention is used, the equipment needed by the subscriber will be as inexpensive as possible, and the price of the base station can be divided between a plurality of subscribers, as the subscriber needs only the handset.

As the transmit/receive alternation is achieved in the timing and radio unit on the basis of the synchronization information transmitted by the base station, the delay between the base station and the radios will not diminish the maximum permissible delay of the system.

The solution according to the invention also allows the roaming function to be implemented more simply than previously, as a call from the network will be forwarded to the base station, which is now able to scan the area of a number of cells to look for the recipient. (This results from the fact that the base station is able to control several timing and radio units each one of which forms its own cell). Accordingly, the user of the telephone is not confined to the area of a single cell.

It is also possible to implement the handover function, as the maintenance of a connection is no longer bound to a receiver and transmitter having a predetermined location, but the call can be switched so that it passes through a radio unit having a more favourable location when the connection deteriorates.

In the following the invention and its preferred embodiments will be described more fully with reference to the examples shown in Figures 5 to 11b in the attached drawings, in which
Figure 1 illustrates transmit/receive alternation in the CT2 system;
Figure 2a illustrates the structure of multiplex 1.2 used in the CT2 system;
Figure 2b illustrates the structure of multiplex 1.4 used in the CT2 system;
Figure 3 illustrates the structure of multiplex 2 used in the CT2 system;
Figure 4a illustrates the structure of multiplex 3 used in the CT2 system;
Figure 4b illustrates the structure of D channels transmitted in multiplex 3 used in the CT2 system;
Figure 4c illustrates the structure of SYN channels transmitted in multiplex 3 used in the CT2 system;
Figure 5 illustrates a system configuration according to the invention;
Figure 6 illustrates one possible way of positioning timing and radio units in the system according to Figure 5;
Figure 7 is a block diagram illustrating a timing and radio unit connected at the subscriber end of a subscriber line in the system according to Figure 5;
Figure 8 illustrates the frame structure of data transmitted between a base station and a timing and radio unit;
Figure 9 illustrates the multiframe structure of data transmitted between a base station and a timing and radio unit;
Figure 10a illustrates the first shaping means of the timing and radio unit in more detail, the shaping means being used for shortening the data of the SYN channel when multiplex 2 is used at the call establishment stage;
Figure 10b illustrates the operation of the first shaping means shown in Figure 10a;
Figure 11a illustrates the second shaping means of the timing and radio unit in more detail, the shaping means being used for lengthening the data of the SYN channel when multiplex 2 is used at the call establishment stage; and
Figure 11b illustrates the operation of the second shaping means shown in Figure lla.

As the ISDN basic access is clearly the most widely used subscriber access to a public telephone network, the preferred embodiment of the invention is such that the timing and radio unit is connected e.g. through an ISDN-U interface to the ISDN basic access. Before the system according to the invention is described in more detail, the above concepts will be explained briefly.

The ISDN-U is an interface associated with the subscriber line connection; its standardisation is specified by CCITT. There are several draft recommendations concerning the U-interface. One of them defines the interface by the 2B1Q line code.

The interface between the ISDN subscriber and the network offers channels of different types for the transmission of information between the subscriber and the network. The ISDN recommendations include B, D and H channels. The B channel is a 64-kbit/s channel provided with timing and applicable e.g. in speech transmission (64 kbit/s) in compliance with the CCITT recommendation G.711, or for the transmission of wide-band speech coded to 64 kbit/s. The D channel is primarily intended for use as a signalling channel over circuit-switched connections, but it may also be used in the transmission of packet-switched data. The rate of the D channel is 16 kbit/s or 64 kbit/s, depending on the application. H channels in turn are wide-band channels provided with timing.

Various channel structures are obtained for ISDN user accesses by combining the channels. The channel structure of the basic access is 2B+D, and that of the primary access 30B+D.

As the channel structure of the basic access is of the format 2B+D, two B channels (both 64 kbit/s) and one D channel (16 kbit/s) can be connected to the ISDN subscriber line. There are thus two separate speech connections and one signalling channel or packet-switched data transmission connection available for the subscriber.

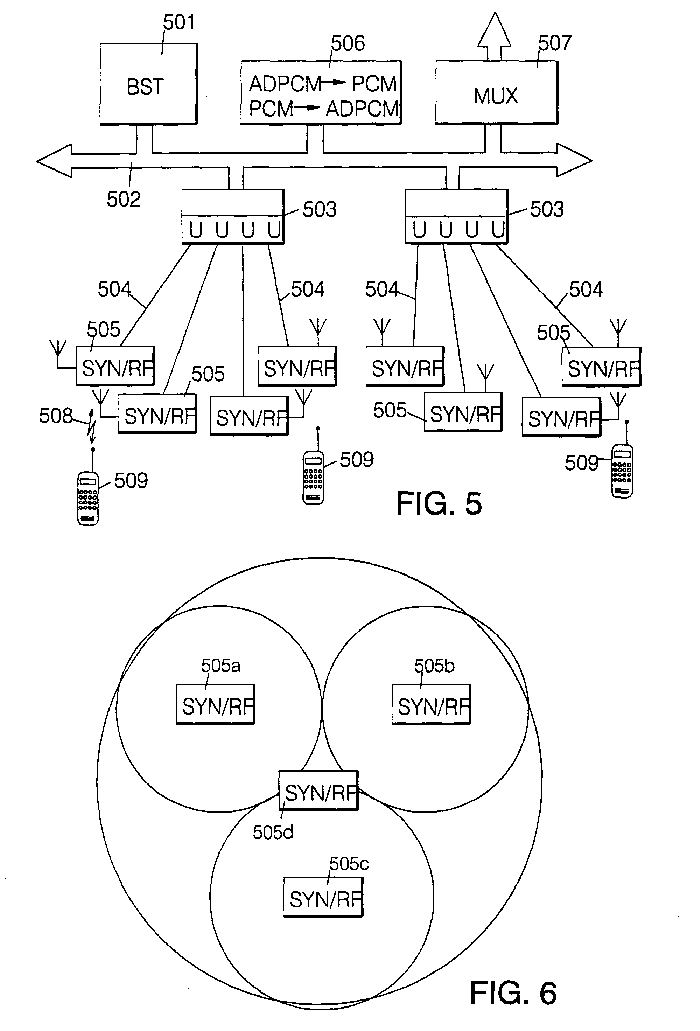

Figure 5 shows one possible system configuration according to the invention. The system comprises a base station 501 connected e.g. to the same bus 502 as a subscriber network ISDN-U subscriber access board 503 (or boards 503), and timing and radio units 505, of which there are several, in this case eight, per one base station at the subscriber ends of conventional subscriber lines 504. The base station 501 is a CT2 base station known *per se,* but its radio parts have been transferred into the timing and radio unit 505 provided at the subscriber end of the subscriber line; the timing and radio unit will be described more closely below. In addition, the CT2 specification is applied in the base station in a slightly modified form with regard to the SYN channel of multiplex 2. The base station may also be provided with features known *per se* from cellular networks, such as the roaming and handover functions, which are local functions, i.e. operative within the area of a single base station 501. These features will also be described more fully below.

An ADPCM/PCM coder 506 is also connected to the system bus 502. It takes care of speech channel coding and decoding of a coded speech channel into a normal PCM speech channel. (The ADPCM coder operating at 32 kbit/s is defined in the CCITT recommendation G.721.) The coder may also be included in the base station 501. Moreover, the same system bus 502 has an associated device transferring a call to a higher level in the network, such as a 2-Mbit/s or 8-Mbit/s multiplexer 507.

The processing of the CT2 protocol (call processing) is thus performed in the base station 501, which, in practice, is able to service e.g. 30 simultaneous CT2 calls. Each timing and radio unit 505 at the end of the subscriber line contains a radio part and a digital part shaping CT2 calls into the 2B+D format corresponding with the ISDN basic access, in order that the calls could be passed over the subscriber line. The radio parts communicate with handsets 509 via a radio link 508; there are typically a plurality of handsets within a cell formed by a single timing and radio unit 505.

In the example shown in Figure 5, each timing and radio unit 505 is positioned in the ISDN basic access in place of an ISDN terminal equipment (such as an ISDN telephone), whereby the subscriber line services the timing and radio unit. It is thus possible to transfer four simultaneous CT2 calls through the ISDN-U interface, when the ADPCM/PCM coder is also positioned at the exchange end of the subscriber line. The transmission capacity required by one CT2 call is 32+4 kbit/s (in both directions), so that the transmission capacity required by four simultaneous calls is 4 x 36 kbit/s = 144 kbit/s, which corresponds to the transmission capacity of the ISDN basic access (2B+D, 2x64 kbit/s + 16 kbit/s). In the ISDN basic access, the delays of the B and D channels may differ from each other, which makes it difficult to use the basic access as a 144-kbit/s channel. The solution according to the invention, however, allows the B and D channels to have different delays without causing interference to the operation of the system. If the delays of the B and D channels are different, the magnitude of the delay difference need not be determined, as the solution according to the invention does not require that the basic access should be used as a transparent 144-kbit/s channel. In the speech state, speech is transmitted on the B channel and signalling on the D channel; with multiplex 2, signalling is transmitted on the B channel and the D channel is empty. The system according to the invention requires not only data transmission needed by calls but also transmission of synchronization data and handover data between the base station and the timing and radio unit.

Figure 6 shows one possible way of positioning the timing and radio units in a case where there are four units altogether. Three units 505a to 505c cover areas substantially tangent to each other, whereas the fourth unit 505d is used as a so-called umbrella cell, which covers the combined coverage area of the other cells. In practice, the larger coverage of the umbrella cell is accomplished by a greater antenna gain. It is known as such from other systems to use such an umbrella cell to release congestion situations. For instance, if four calls (the maximum number of simultaneous calls) are in progress within the area of the cell 505a, the calls of any further subscribers possibly initiating a call at the same time can be passed through the radios of the umbrella cell.

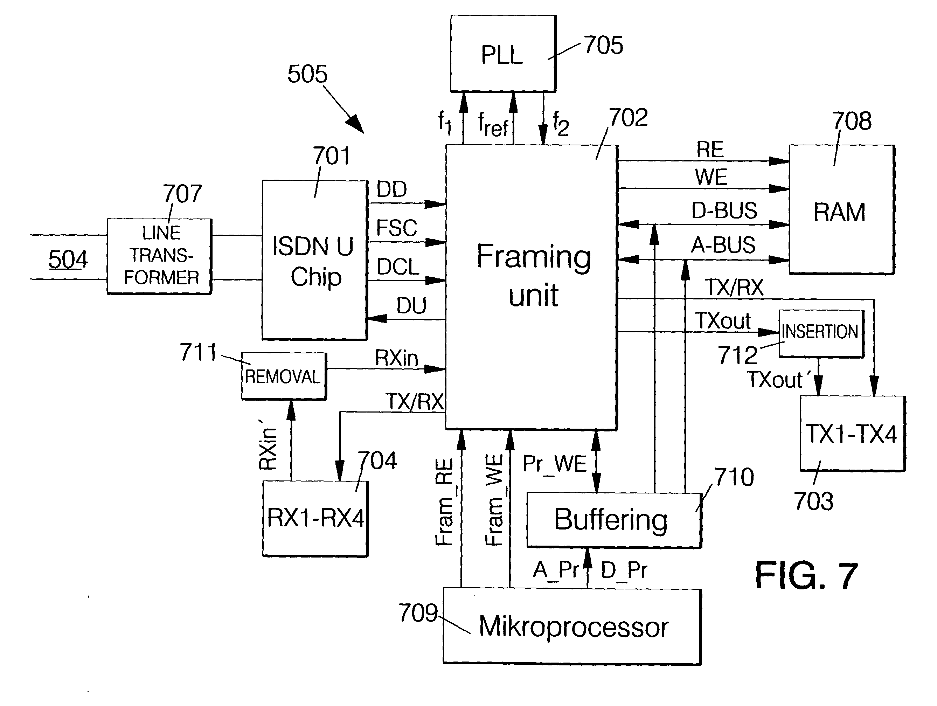

Figure 7 illustrates an individual timing and radio unit 505 in more detail. The unit positioned at the subscriber end of the subscriber line 504 comprises five main blocks, namely: an interface unit 701, which takes care of interfacing to the ISDN subscriber line, a digital framing unit 702, which converts data between two different formats; radio transmitters 703, and radio receivers 704; and a phase lock loop 705, which generates clock pulses needed by the framing unit 702. The timing and radio unit further comprises an ac-coupled line transformer 707, which is connected between the interface unit 701 and the subscriber line 504; a RAM memory 708 used as a buffer memory between the radio parts and the ISDN-U interface; and a microprocessor 709 having its data bus connected to the framing unit 702 (to its data bus), and controlling the operations of the timing and radio unit. Both the microprocessor and the framing unit use the RAM memory 708, wherefore a separate buffering circuit 710 is provided between the microprocessor and the framing unit. Data from the receivers 704 is processed in a first shaping circuit 711 before it is switched to the framing unit; correspondingly, data from the framing unit 702 is processed in a second shaping circuit 712 before it is switched to the transmitters 703. In practice, the timing and radio unit further comprises a power supply, which however is not shown for the sake of clarity. Power needed by the unit may also be supplied through the subscriber line, whereby no separate power supply is needed.

The function of the timing and radio unit is, on one hand, to receive data from the subscriber line 504 and store it in an appropriate format in the buffer memory 708 to wait for the start of transmission, and on the other hand, to receive transmission from the radio and store it in the buffer memory 708 to wait for its transmission over the subscriber line. In addition to this, the timing and radio unit synchronizes its operation in accordance with synchronization signals passed over the ISDN-U interface.

The interface unit 701 forming the ISDN-U interface of the base station may be made up e.g. of a commercial special circuit, which converts the 2B1Q line code of the U interface into the GCI (General Circuit Interface) format, and *vice versa.* This circuit may be e.g. the IDSN-U-PEB 2091 circuit of Siemens. The circuit contains adaptive echo suppression, and it is able to regenerate the data clock and frame synchronization. In Figure 7, the data clock signal is indicated with the reference DCL, and the frame synchronization signal with the reference FSC. In addition to the normal 2B+D transmission (144 kbit/s), this circuit transmits a 4-kbit/s control channel, which, for instance, provides information on whether the transmission has been successful by the use of the CRC check.

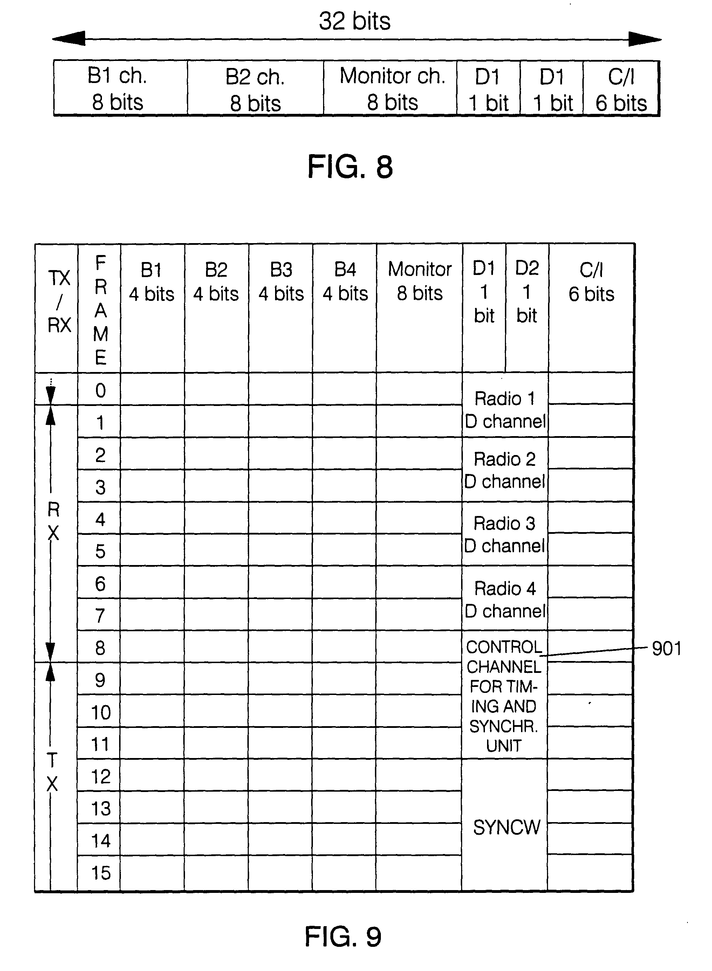

The above-mentioned GCI is an open interface specification developed by Alcatel, Italtel, GPT, and Siemens together. Figure 8 shows the structure of a GCI frame. The GCI frame is 32 bits in length, and its frame rate is 8 kHz. The duration of one frame is thus 125 µs and bit rate 256 kbit/s. The frame first comprises two B channels (B1 and B2), each having eight bits per frame. They are followed by the 8 bits of the monitoring channel and then by two D channels (D1 and D2), one bit for each channel. The frame is terminated by a 6-bit control block, through which it is possible to transfer e.g. control data to devices connected to the GCI bus. The GCI will not be described more closely here, but Reference [6], for instance, describes its contents in detail.

The framing unit 702 shown in Figure 7 is a digital block which receives data DD from the interface unit 701 forming the U interface, and transmits it to the radio transmitter 703 in accordance with the slightly modified CT2 format. This signal is indicated by the reference TXout in the figure. In the shaping unit 712 (to be described more fully below), the CT2 format is corrected so that it complies fully with the standard. On the other hand, the framing unit receives data RXin from the radio receivers 704, which data has first been shaped in the shaping circuit 711, and then transmits it to the interface unit 701. The data to be transmitted from the framing unit to the interface unit is indicated with the reference DU. The main function of the framing unit 702 is thus the change of protocol from GCI to CT2, and *vice versa.* Its other functions include monitoring the synchronization of transmission. The unit further contains the management of the RAM buffer memory 708.

The phase-locked loop 705 generates the clock pulses required by the framing unit 702 from a clock signal DCL applied to the framing unit across the U interface, a basic frequency f₁ to be applied to the phase comparator of the phase lock being derived from the clock signal DCL by dividing. A clock signal obtained from the oscillator of the phase lock is indicated with the reference f₂. A reference frequency f_{ref} to be applied to the phase lock is obtained from this signal by dividing.

The framing unit 702 controls writing into the buffer memory 708 by a signal WE (Write Enable) and reading from the buffer memory by a signal RE (Read Enable). A data bus between the framing unit 702 and the RAM memory 708 (over which data is transmitted) is indicated with the reference D-BUS, and an address bus therebetween (over which the read and write addresses are given) correspondingly with the reference A-BUS.

A clock signal TX/RX is connected from the framing unit to both the transmitters 703 and the receivers 704 so as to switch the transmitters and receivers alternately to the antenna. The generation of the TX/RX clock signal will be described later with reference to Figure 9.

The operations of the timing and radio unit are controlled by a microprocessor 709, which may be e.g. of the type 68HC11. In this specific structure, the RAM buffer memory 708 forms part of the memory space of the processor, wherefore a separate buffering circuit 710 is provided between the framing unit and the microprocessor. The data bus of the processor is connected to the data bus of the framing unit by latch circuits (not shown) contained in the buffering circuit and used as intermediate stores between the memory and the microprocessor. (These latch circuits may be e.g. of the type 74HC373.) When writing into the memory, the microprocessor, in fact, writes data D_Pr and corresponding addresses A_Pr into data latch and address latch circuits. From the buffering circuit, data is transmitted into the actual buffer memory under the control of the framing unit when the framing unit uses the signal Pr_WE to give the buffering circuit a permission to write into the buffer memory. When the processor wants to use the common memory, it applies signals Fram_WE and Fram_RE to the framing unit 702, which signals are the processor's write and read requests into the common buffer memory 708.

As the management of the common memory, however, is not directly relevant to the present invention, it will not be described more closely herein.

Data (DD and DU in Figure 7) to be transmitted between the interface unit 701 and the framing unit 702 is made up of GCI frames, the structure of which was described with reference to Figure 8 above. In order that conversion between GCI and CT2 would be possible, normal GCI frames have to be formed into a multiframe structure. This may be done e.g. as shown in Figure 9, i.e. by the use of a multiframe structure made up of 16 normal GCI frames. The synchronization of the multiframe is performed by a synchronization word SYNCW transmitted on the D channel. No other information associated with the multiframe structure need to be transmitted, but synchronization takes place by using the bit clock DCL (2 x bit rate) transferred across the U interface, the frame synchronization signal FSC (8 kHz), and a synchronization word SYNCW received over the D channels. The framing unit 702 contains frame counters (not shown), which count the order number of a frame transferred over the U interface in accordance with the multiframe structure and, within the frame, the order number of a bit received from the subscriber line or transmitted to the subscriber line. The synchronization signal TX/RX (500 Hz) determining the transmit/receive alternation is derived from the signal f₂ by dividing. The concerned frame counters in turn are synchronized (set to zero) by the synchronization word SYNCW, whereby the transmit/receive alternation will be such as shown in Figure 9, i.e. such that the transmission period TX terminates and the reception period RX starts when the frame number 0 has been received from the subscriber line, and the following transmission period TX starts again when the frame number 8 has been received.

In the multiframe, the D channels are divided into six consecutive portions. The first four portions contain the D channel from and to the radios 1 to 4 in the CT2 format. Then follows a telecommunication channel (frames 8 to 11) between the base station and the timing and radio unit, indicated with the reference numeral 901. The last eight bits (frames 12 to 15) contain the above-mentioned multiframe synchronization word SYNCW, which determines the synchronization of the frame counters of the framing units.

If more capacity is to be made available for communication between the base station and the timing and radio unit, it might be possible that the synchronization word is not transmitted during each multiframe period, but, for instance, only at each fourth time. The maintenance of synchronization could be monitored e.g. by one bit, that is, if the last bit of the synchronization word is one, zero is transmitted in place of the last bit when the entire synchronization word is not transmitted.

On the telecommunication channel 901 between the base station and the timing and radio unit, the base station is able to indicate the radio e.g. of channel data, i.e. indicate which channel is assigned to the radio. Correspondingly, the timing and radio unit can use the telecommunication channel to give the base station information about signal level on a specific channel. In this way, the base station is able to transfer the subscriber to the area of the cell having the highest signal strength (handover function).

In the speech transfer state, the data of four speech channels is transmitted on channels B1 to B4 shown in Figure 9, each one of which contains 4 bits. In the speech transfer state, both of the 8-bit channels of the GCI frame (Figure 8) are thus divided between two speech channels. It is further to be noted that the interface unit 701 does not change the data frame structure, but data passing on the subscriber line has the frame and multiframe structure shown in Figure 9.

The framing unit 702 performs the protocol conversion from GCI to CT2 on generating addresses at which data received over the subscriber line is stored in the buffer memory 708. The data is thus stored in advance in such an order that when the contents of the memory positions are read consecutively into the transmitter, the data will be arranged in the right order, i.e. in the order required by the CT2 protocol. In the reverse direction, i.e. on receiving data from the receivers, the framing unit stores the data in the memory in the order in which it is received, and only when the data is transmitted over the subscriber line, forms the read addresses, so that relevant data (complying with the GCI format) will always be read into the transfer register (not shown) to be transmitted.

As the transmission capacity required by the four CT2 channels corresponds to the capacity of the ISDN basic access, each timing and radio unit contains, in the preferred embodiment of the invention, four radios (four transmitters TX1 to TX4, and four receivers RX1 to RX4), as shown in Figure 7. However, it has to be possible to pack these four CT2 channels in a reasonable manner into the 2B+D format corresponding with the ISDN basic access. When calls are in the speech transfer state, one half of the capacity of both of the B channels can be allocated to the speech transfer of one call while the required signalling is transmitted on the D channel. The problem itself occurs at the call establishment stage, as one CT2 connection needs the 16-kbit/s D channel during connection establishment, while calls in progress need all the time 1 to 2 kbit/s of the capacity of the D channel. However, speech need not be transmitted at that stage of the connection establishment when 16 kbit/s of the capacity of the D channel is needed, so that the B channel can be used for data transmission during connection establishment. As the length of multiplex 2 used in connection establishment is 66 bits for the D and SYN channels (cf. Figure 3), it cannot be fitted in the B channel as such. In principle, it could be possible to transfer multiplex 2 in the same way as multiplex 1.2 (cf. Figure 2a) and multiplex 1.4 (cf. Figure 2a), which transfer speech, whereas the first and last bit or 2 bits are transmitted to the D channel when the other bits are passed to the B channel. This arrangement can be implemented on transferring a frame complying with multiplex 3 and transmitted by a handset, as the first and last bits are thereby not decisive for the understanding of the message. In other words, the first and last bit or 2 bits of each period of 1 ms (66 or 68 bits, when the empty guard bits at the start and end of the period are not taken into account) is/are thus transmitted on the D channel of the subscriber line and the remaining bits on the B channel of the subscriber line. This, however, is not possible in the case of multiplex 2, where the first and last bit form part of 16-bit words, and when the delays of the B and D channels are different from each other, it would be very difficult to reassemble the data words at the base station.

The problem is solved by shaping the SYN channel contained in multiplex 2 in the shaping units 711 and 712. As shown in Figure 3, the SYN channel contains a 24-bit code word and a 10-bit preamble 31, which together form a 34-bit fixed bit pattern. However, the code word has to be of a predetermined format, so that it is not worth shaping. (This is due to the fact that the code word has been selected so that it meets certain auto- and cross-correlation requirements, which probably will not be met if the word is changed.) The preamble, on the contrary, is a fixed, known bit pattern (1010101010), the significance of which lies mainly in that it facilitates the bit synchronization of the receiver. Accordingly, the preamble can well be shortened after reception.

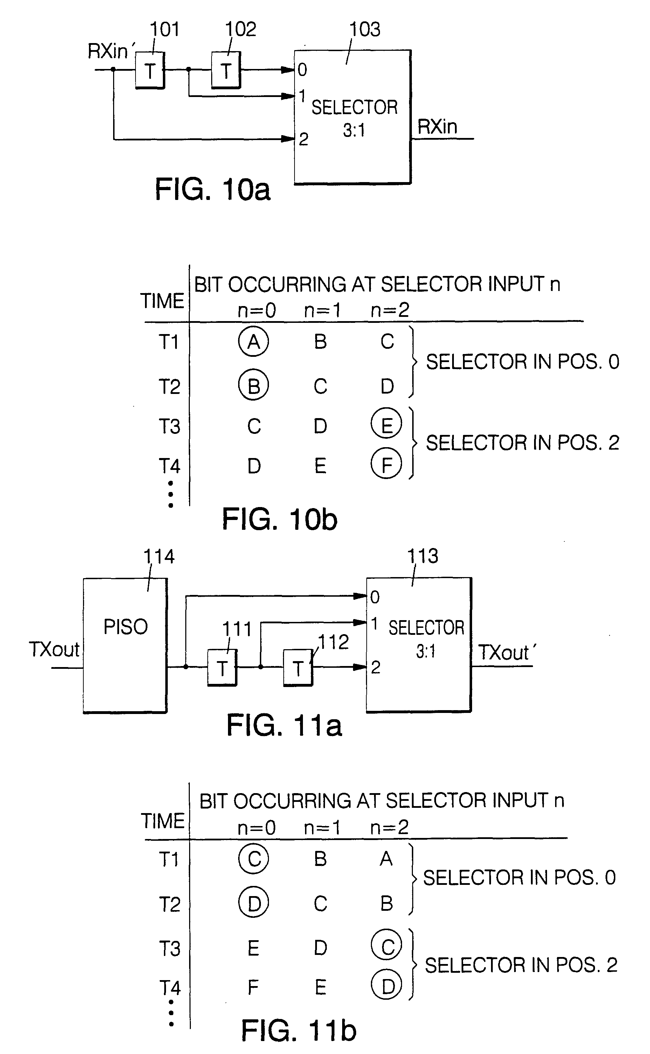

Figure 10a shows the first shaping circuit 711, which shortens the preamble contained in the SYN channel by two bits so that the frame could be fitted in the ISDN-B channel. The shaping circuit comprises a delay line with two successive delay units 101 and 102 and a 3:1 selector 103. The delay of both of the delay units corresponds to the length of one bit. Data RXin' from the radios is applied both to the input of the first delay unit and to a selector input 2. From between the delay units, data is connected to a selector input 1, and from the output of the latter delay unit 102 to a selector input 0.

The operation of the shaping circuit 711 is illustrated in Figure 10b, where the first column describes time at intervals of one bit (T1 to T4), and the next three columns describe bits occurring at the selector inputs when a bit sequence ABCDEF..., etc., is used as an example. At T1, bit A appears at selector input 0, bit B at input 1, and bit C at input 2. At T2, the bit sequence has moved onwards, whereby bit B appears at selector input 0, bit C at input 1, and bit D at input 2. Correspondingly, at T3, bits CDE appear at the inputs, and at T4, bits DEF, etc. At T1 and T2, the selector is in position 0, whereby bits A and B appear at the selector output. The selector is then moved to position 2, whereby bits E and F appear at its output. Bits C and D have thus been removed from the output signal of the selector. The bits occurring at the selector output are circled in Figure 10b.

Figure 11a shows the second shaping circuit 712, which lengthens the preamble 31 of the SYN channel contained in multiplex 2 by two bits before transmission so that a standard CT2 handset would understand the transmission. The shaping circuit 712 comprises a delay line with two successive delay units 111 and 112, and a 3:1 selector 113. The delay of both of the delay units still corresponds to the length of one bit. Data from a Parallel in Serial Out (PISO) transformer 114 is applied both to the input of the first delay unit and to a selector input 0. From between the delay units, data is connected to a selector input 1, and from the output of the latter delay unit to a selector input 2.

The operation of the shaping circuit is illustrated in Figure 11b, where the first column describes time at intervals of one bit (T1 to T4), and the next three columns describe bits occurring at the selector inputs when a bit sequence ABCDEF..., etc., is used as an example. At T1, bit C appears at selector input 0, bit B at input 1, and bit A at input 2. At T2, the bit sequence has moved onwards, whereby bit D appears at selector input 0, bit C at input 1, and bit B at input 2. Correspondingly, at T3, bits EDC appear at the inputs, and at T4, bits FED, etc. At T1 and T2, the selector is in position 0, whereby bits C and D appear at the selector output. The selector is then moved to position 2, whereby bits C and D appear at its output. Bits C and D have thus been duplicated in the output signal of the selector. The bits occurring at the selector output are circled in Figure 11b.

In the shaping circuit 712, the selector is in position 1 when normal speech is transmitted (multiplex 1). The three-position selector is needed as the bit sequence complying with multiplex 2 has to be extended uniformly, i.e. the beginning has to be "advanced" by one bit (position 0) with respect to multiplex 1, whereas the end portion has to be delayed by one bit (position 2) so that two extra bits could be fitted in the bit sequence. If this is not done, the bit sequence of multiplex 2 will have a phase shift with respect to the bit sequence of multiplex 1, and thus the transmission would not comply with the CT2 standard. The same principle applies in reverse to the shortening performed by the shaping circuit 711.

The shaping circuits 711 and 712 are informed over the telecommunication channel 901 when the radio uses multiplex 2, where the lengthening and shortening are performed. It is further to be noted that in the speech transfer state, speech data is transmitted on the B channels and signalling on the D channel. The above-described adaptation of CT2 calls to an ISDN basic access forms the subject matter in a parallel International Patent Application WO95/05719.

The transmission of the D channel of the CT2 system can be performed during call establishment as described above in the B channel of the ISDN subscriber line without difficulties; on the other hand, the D channel of the subscriber line need to be used only in the speech transfer state, so that at least 8 kbit/s of the capacity of the D channel of the subscriber line remains unused. This extra transmission capacity is utilized for the transmission of synchronization and control information as described with reference to Figure 9.

Even though the invention has been described with reference to the examples shown in the attached drawings, it is self-evident that the invention is not limited to it, but it may be modified within the inventive idea disclosed above and in the attached claims. By applying the principle according to the invention, it would be possible e.g. to decode encoded speech in the timing and radio unit and use only two radios for one timing and radio unit. The use of the above-described shaping means is thus not necessary; however, an important additional advantage will be lost if such means are not used, that is, the more efficient utilization of the capacity of the subscriber line.

References:
[1]. BS6833: Parts 1&2: 1987 Apparatus using cordless attachments (excluding cellular radio apparatus) for connecting to analogue interfaces of public switched telephone networks.
[2]. MPT 1334: December 1987, Performance specification. Radio equipment for use at fixed and portable stations in the Cordless Telephone service operating in the band 864 to 868 MHz.
[3]. MPT 1375: May 1989, Common Air Interface Specification to be used for the interworking between cordless telephone apparatus.
[4]. MPT 1317: 1981, Transmission of digital information over Land Mobile Radio Systems.
[5]. Evans M. W., CT2 Common Air Interface. British Telecommunications Engineering, July 1990, Vol.9.
[6]. Group of Four documentation for Contract Module Number 3 General Circuit Interface (GCI), Issue 1.0, March 1989

## Claims

1. CT2 telephone system comprising at least one base station (501) connected to a public telephone network, and handsets (509) used by subscribers and communicating with the base station via a radio link (508), **characterized in that** the base station functions are distributed to the opposite ends of subscriber lines (504) of a public telephone network in such a way that
- the at least one base station (501), comprising means for processing CT2 calls and without radio parts, is arranged at the exchange end of a subscriber line (504), and
- a separate timing and radio unit (505) is arranged at the subscriber end of at least one subscriber line (504) connected to the base station (501), the timing and radio unit comprising the radio parts (703, 704) of the base station, and timing means (701, 702) for synchronizing the transmit/receive alternation of the radio parts (703, 704) by synchronization data transmitted by the base station (501).

2. CT2 telephone system according to claim 1, **characterized in that** a plurality of timing and radio units (505) are connected to one base station (501) by means of the subscriber lines (504).

3. CT2 telephone system according to claim 1, **characterized in that** the timing and radio unit comprises means for receiving a synchronization word (SYNCW) transmitted by the base station in a multiframe structure of data, and for synchronizing a clock signal (TX/RX) determining the transmit/receive alternation by said received synchronization word.

4. CT2 telephone system according to claim 1,
**characterized in that** an ADPCM/PCM coder of the system is also arranged at the exchange end of the subscriber line (504).

5. CT2 telephone system according to claim 4, **characterized in that** the subscriber line is a subscriber line complying with the ISDN basic access (2B+D), and **in that** each timing and radio unit (505) comprises four radio transmitters (TX1 to TX4) and four radio receivers (RX1 to RX4).

6. CT2 telephone system according to claim 2, **characterized in that** the timing and radio units are positioned in groups of four units (505a to 505d) so that the three units of the group (505a to 505c) cover areas substantially tangent to each other, while the fourth unit (505d) in the group alone substantially covers the combined coverage area of all the other three units.

7. CT2 telephone system according to claim 5, **characterized in that** the subscribers of the system have at their disposal more than four handsets (509) for one timing and radio unit (505).

8. CT2 telephone system according to claim 5, **characterized in that** it comprises a handover function, whereby a connection between the base station (501) and the subscriber handset (509) can be changed during an ongoing call to pass through any one of the timing and radio units (505) without interrupting the call.

9. CT2 telephone system according to claim 5, **characterized in that** it comprises a roaming function, whereby a connection between the base station (501) and the subscriber handset (509) can be established irrespective of which timing and radio unit (505) serves the area within which the handset (509) is located.

## Patentansprüche

1. CT2-Telefonsystem mit zumindest einer an ein öffentliches Telefonnetzwerk angeschlossenen Basisstation (501) und mit von Teilnehmern verwendeten und mit der Basisstation über eine Funkstrecke (508) kommunizierenden Handgeräten (509), **dadurch gekennzeichnet, dass**
die Basisstationsfunktionen zu den gegenüberliegenden Enden von Teilnehmerleitungen (504) eines öffentlichen Telefonnetzwerks derart verteilt sind, dass
die zumindest eine Basisstation (501), die Einrichtungen zur Verarbeitung von CT2-Rufen aufweist und ohne Funkkomponenten ist, an dem vermittlungsseitigen Ende einer Teilnehmerleitung (504) angeordnet ist, und
eine separate Zeitsteuerungs- und Funkeinheit (505) an dem teilnehmerseitigen Ende von zumindest einer an die Basisstation (501) angeschlossenen Teilnehmerleitung (504) angeordnet ist, wobei die Zeitsteuerungs- und Funkeinheit die Funkkomponenten (703, 704) der Basisstation und Zeitsteuerungseinrichtungen (701, 702) zur Synchronisation des Sende/Empfangs-Wechsels der Funkkomponenten (703, 704) anhand von seitens der Basisstation (501) gesendeten Synchronisationsdaten aufweist.

2. CT2-Telefonsystem nach Anspruch 1, **dadurch gekennzeichnet, dass** eine Vielzahl von Zeitsteuerungs- und Funkeinheiten (505) mittels der Teilnehmerleitungen (504) an eine Basisstation (501) angeschlossen sind.

3. CT2-Telefonsystem nach Anspruch 1, **dadurch gekennzeichnet, dass** die Zeitsteuerungs- und Funkeinheit Einrichtungen zum Empfangen eines Synchronisationsworts (SYNCW) aufweist, welches von der Basisstation in einer Multirahmenstruktur von Daten gesendet wurde, und Einrichtungen zum Synchronisieren eines den Sende/Empfangs-Wechsel bestimmenden Taktsignals (TX/RX) anhand des empfangenen Synchronisationsworts aufweist.

4. CT2-Telefonsystem nach Anspruch 1, **dadurch gekennzeichnet, dass** ein ADPCM/PCM-Codierer des Systems ebenfalls an dem vermittlungsseitigen Ende der Teilnehmerleitung (504) angeordnet ist.

5. CT2-Telefonsystem nach Anspruch 4, **dadurch gekennzeichnet, dass** die Teilnehmerleitung eine die Anforderungen des ISDN-Basiszugangs (2B + D) erfüllende Teilnehmerleitung ist, und dass jede Zeitsteuerungs- und Funkeinheit (505) vier Funksender (TX1 bis TX4) und vier Funkempfänger (RX1 bis RX4) aufweist.

6. CT2-Telefonsystem nach Anspruch 2, **dadurch gekennzeichnet, dass** die Zeitsteuerungs- und Funkeinheiten in Gruppen von vier Einheiten (505a bis 505d) positioniert sind, so dass die drei Einheiten der Gruppe (505a bis 505c) im wesentlichen aneinander angrenzende Bereiche abdecken, während die vierte Einheit (505d) in der Gruppe alleine im wesentlichen den kombinierten Sendebereich von allen anderen drei Einheiten abdeckt.

7. CT2-Telefonsystem nach Anspruch 5, **dadurch gekennzeichnet, dass** die Teilnehmer des Systems mehr als vier Handgeräte (509) für eine Zeitsteuerungs- und Funkeinheit (505) zu ihrer Verfügung haben.

8. CT2-Telefonsystem nach Anspruch 5, **dadurch gekennzeichnet, dass** es eine Handover-Funktion aufweist, wodurch eine Verbindung zwischen der Basisstation (501) und dem Teilnehmerhandgerät (509) während eines laufenden Rufs geändert werden kann, um durch irgendeine der Zeitsteuerungs- und Funkeinheiten (505) zu verlaufen, ohne den Ruf zu unterbrechen.

9. CT2-Telefonsystem nach Anspruch 5, **dadurch gekennzeichnet, dass** es eine Roaming-Funktion aufweist, wodurch eine Verbindung zwischen der Basisstation (501) und dem Teilnehmerhandgerät (509) unabhängig davon errichtet werden kann, welche Zeitsteuerungs- und Funkeinheit (505) den Bereich versorgt, innerhalb dessen das Handgerät (509) angeordnet ist.

## Revendications

1. Un système téléphonique CT2 comprenant au moins une station de base (501) connectée à un réseau téléphonique public, et des combinés (509) utilisés par des abonnés et communiquant avec la station de base via une liaison radio (508),
**caractérisé en ce que** les fonctions de la station de base sont distribuées aux extrémités opposées des lignes d'abonnés (504) d'un réseau téléphonique public de telle manière qu'au moins :
- une station de base (501), comprenant des moyens de traitement des appels CT2 et sans parties radio, est disposée à la limite de la circonscription d'une ligne d'abonné (504), et
- une unité séparée de radio et de minutage (505) est disposée à la limite de la zone de l'abonné d'au moins une ligne d'abonné (504) connectée à la station de base (501), l'unité de radio et de minutage comprenant les parties radio (703, 704) de la station de base, et des moyens de minutage (701, 702) pour synchroniser l'alternance émission/réception des parties radio (703, 704) par synchronisation des données émises par la station de base (501).

2. Système téléphonique CT2 selon la revendication 1,
**caractérisé en ce qu'**une pluralité d'unités de radio et de minutage (505) sont connectées à une station de base (501) au moyen des lignes d'abonnés (504).

3. Système téléphonique CT2 selon la revendication 1,
**caractérisé en ce que** l'unité de radio et de minutage comprend des moyens pour recevoir un ordre de synchronisation (SYNCW) émis par la station de base dans une structure multitrame de données, et pour synchroniser un signal d'horloge (TX/RX) déterminant l'alternance émission/réception par ledit ordre reçu de synchronisation.

4. Système téléphonique CT2 selon la revendication 1,
**caractérisé en ce qu'**un codeur MICDA/MIC du système est également disposé à la limite de circonscription de la ligne d'abonné (504).

5. Système téléphonique CT2 selon la revendication 4,
**caractérisé en ce que** la ligne d'abonné est une ligne d'abonné se conformant à l'accès basique ISDN (2B + D), et **en ce que** chaque unité de radio et de minutage (505) comprend quatre émetteurs radios (TX1 à TX4) et quatre récepteurs radio (RX1 à RX4).

6. Système téléphonique CT2 selon la revendication 2,
**caractérisé en ce que** les unités de radio et de minutage sont positionnées en groupes de quatre unités (505a à 505d) afin que les trois unités du groupe (505a à 505c) couvrent des zones substantiellement tangentes les unes aux autres, tandis que la quatrième unité (505d) dans le groupe couvre substantiellement la zone de couverture combinée de toutes les autres trois unités.

7. Système téléphonique CT2 selon la revendication 5,
**caractérisé en ce que** les abonnés du système ont à leur disposition plus de quatre combinés (509) pour une unité de radio et de minutage (505).

8. Système téléphonique CT2 selon la revendication 5,
**caractérisé en ce qu'**il comprend une fonction de transfert, grâce à quoi une connexion entre la station de base (501) et le combiné de l'abonné (509) peut être changé, pendant un appel permanent, pour passer par une des unités de radio et de minutage (505) sans interrompre l'appel.

9. Système téléphonique CT2 selon la revendication 5,
**caractérisé en ce qu'**il comprend une fonction itinérante, grâce à laquelle une connexion entre la station de base (501) et le combiné d'abonné (509) peut être établie sans tenir compte de quelle unité de radio et de minutage (505) sert la zone dans laquelle le combiné (509) est situé.
